# EUROPEAN PATENT APPLICATION

(11) **EP 4 113 357 A1**
(43) Date of publication of application: **04.01.2023**
(21) Application number: 22185888.9
(22) Date of filing: 20.07.2022
(51) Int. Cl.: G06F 40/216, G06F 40/247, G06F 40/284, G06F 40/295

(54) **METHOD AND APPARATUS FOR RECOGNIZING ENTITY, ELECTRONIC DEVICE AND STORAGE MEDIUM**

(30) Priority: 20.07.2021 CN 202110821289
(71) Applicant: Beijing Baidu Netcom Science and Technology Co., Ltd., Beijing 100085 (CN)
(72) Inventor: WAN, Fan, Beijing, 100085 (CN); LUO, Jinchang, Beijing, 100085 (CN); WANG, Jie, Beijing, 100085 (CN); WANG, Haiwei, Beijing, 100085 (CN); CHEN, Kunbin, Beijing, 100085 (CN); HE, Wei, Beijing, 100085 (CN)
(74) Representative: Maiwald GmbH

(57) **Abstract**

The disclosure provides a method for recognizing an entity, an apparatus for recognizing an entity, an electronic device and a storage medium, and relates to the field of computer technology, in particular to the field of artificial intelligence technology such as cloud computing, knowledge graph, and natural language processing. The method includes: obtaining message data to be processed; obtaining entity mention information by processing the message data to be processed according to a multi-pattern matching method; determining one or more candidate entities associated with the entity mention information and entity description information corresponding to the one or more candidate entities; and determining a target entity mentioned in the entity mention information according to the message data to be processed and the entity description information.

## Description

### TECHNICAL FIELD

The disclosure relates to the field of computer technologies, especially to the field of artificial intelligence (AI) technologies such as cloud computing, knowledge graph and natural language processing (NLP), and in particular to a method for recognizing an entity, an apparatus for recognizing an entity, an electronic device and a storage medium.

### BACKGROUND

Artificial intelligence (AI) is a study of making computers to simulate certain thinking processes and intelligent behaviors of humans (such as learning, reasoning, thinking and planning), which are both hardware-level technologies and software-level technologies. AI hardware technologies generally include technologies such as sensors, dedicated AI chips, cloud computing, distributed storage, and big data processing. AI software technologies mainly include computer vision technology, speech recognition technology, natural language processing (NLP) technology, machine learning, deep learning, big data processing technology, knowledge graph technology and other major directions.

In a message interaction scenario, due to cognitive differences of users, there may be entity mention information unfamiliar to the users. The entity mention information may be exclusive to a project, such as abbreviations, deictic words, project words and cultural words in the project.

### SUMMARY

The embodiments of the disclosure provide a method for recognizing an entity, an apparatus for recognizing an entity, an electronic device, a storage medium and a computer program product.

According to a first aspect of the disclosure, a method for recognizing an entity is provided. The method includes: obtaining message data to be processed; obtaining entity mention information by processing the message data to be processed according to a multi-pattern matching method; determining one or more candidate entities associated with the entity mention information, and determining entity description information corresponding to the one or more candidate entities; and determining a target entity mentioned in the entity mention information according to the message data to be processed and the entity description information.

According to a second aspect of the disclosure, an apparatus for recognizing an entity is provided. The apparatus includes: a first obtaining module, configured to obtain message data to be processed; a processing module, configured to obtain entity mention information by processing the message data to be processed according to a multi-pattern matching method; a first determining module, configured to determine one or more candidate entities associated with the entity mention information, and determine entity description information corresponding to the one or more candidate entities; and a second determining module, configured to determine a target entity mentioned in the entity mention information according to the message data to be processed and the entity description information.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the method for recognizing an entity according to the embodiments of the disclosure is implemented.

According to a fourth aspect of the disclosure, a non-transitory computer-readable storage medium having computer instructions stored thereon is provided. The computer instructions are configured to cause a computer to implement the method for recognizing an entity according to the embodiments of the disclosure.

According to a fifth aspect of the disclosure, a computer program product including computer programs is provided. When the computer programs are executed by a processor, the method for recognizing an entity according to the embodiments of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flow chart of a method for recognizing an entity according to an embodiment of the disclosure.
FIG. 2 is a flow chart of a method for recognizing an entity according to an embodiment of the disclosure.
FIG. 3 is a schematic diagram of entity description information in an embodiment of the disclosure.
FIG. 4 is a schematic diagram of an application scenario of a method for recognizing an entity according to an embodiment of the disclosure.
FIG. 5 is a flow chart of a method for recognizing an entity according to an embodiment of the disclosure.
FIG. 6 is a schematic diagram of training an entity ranking model according to an embodiment of the disclosure.
FIG. 7 is a flow chart of a method for recognizing an entity according to an embodiment of the disclosure.
FIG. 8 is a schematic diagram of application of a method for recognizing an entity according to an embodiment of the disclosure.
FIG. 9 is a block diagram of an apparatus for recognizing an entity according to an embodiment of the disclosure.
FIG. 10 is a block diagram of an apparatus for recognizing an entity according to an embodiment of the disclosure.
FIG. 11 is a schematic diagram of an example electronic device for implementing the method for recognizing an entity according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein. For clarity and conciseness, descriptions of well-known functions and structures are omitted in the following description.

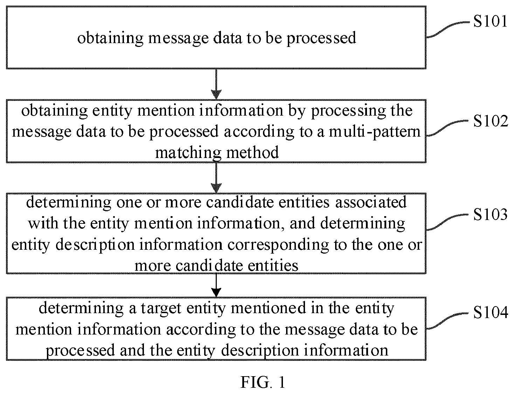

FIG. 1 is a flow chart of a method for recognizing an entity according to an embodiment of the disclosure.

It should be noted that an execution body of a method for recognizing an entity of the embodiment is an apparatus for recognizing an entity. The apparatus can be implemented by software and/or hardware, and can be configured in an electronic device. The electronic device can include but is not limited to a terminal a server and the like.

The embodiments of the disclosure relate to the field of artificial intelligence technologies such as cloud computing, knowledge graph and natural language processing (NLP).

Artificial intelligence is abbreviated as AI. AI is a new technical science that studies and develops theories, methods, techniques and application systems for simulating, extending and expanding human intelligence.

Cloud computing is a type of distributed computing, which refers to decomposing huge data computing processing programs into countless small programs through a network "cloud", and then processing and analyzing these small programs through a system composed of multiple servers to obtain a result and returning the result to the user.

NLP can realize various theories and methods for effective communication between humans and computers using natural language. Deep learning is to learn inherent laws and representation levels of sample data, and the information obtained during these learning processes is of great help to the interpretation of data such as words, images and sounds. The ultimate goal of deep learning is to enable machines to have the ability to analyze and learn like humans, and to recognize data such as words, images and sounds.

Knowledge graph is a modern theory that combines the theories and methods of subjects such as applied mathematics, graphics, information visualization technology, and information science with methods such as metrology citation analysis and co-occurrence analysis, and uses a visual map to visually display a core structure, a development history, a frontier field and overall knowledge structure of the subjects, to achieve the purpose of multi-disciplinary integration.

The embodiments of the disclosure can be applied in a message interaction scenario, for example, an instant messaging (IM) scenario. IM usually supports real-time communication, and allows two or more people to use the network to transmit text messages, files, voices and video for communication in real time.

As illustrated in FIG. 1, the method for recognizing an entity includes the following steps.

In S101, message data to be processed is obtained.

Text messages, files and speeches that are transmitted in real time in the above-mentioned IM scenario may be referred to as message data.

For example, the message data to be processed can be "How to deploy an Ernie model on paddlecloud?".

Paddlecloud is an open-source deep learning platform with complete functions that integrates the core framework of deep learning, tool components and service platforms. The Ernie model is a continuous pre-training framework for language understanding, where pre-training tasks can be built and learned gradually through multi-task learning. In this framework, different custom tasks can be gradually introduced at any time. For example, tasks including named entity prediction, text relationship recognition, sentence order prediction are adopted, so that the model can learn language representation, and description of paddlecloud and the Ernie model will not be repeated here.

In the embodiment of the disclosure, the message data transmitted in the IM scenario can be monitored in real time. When the message data transmitted in real time is captured, the text data corresponding to the message data is determined as the message data to be processed. Certainly, the speech data corresponding to the message data may also be determined as the message data to be processed. That is, the forms of the message data to be processed in the embodiments of the disclosure may be text, speech, and the like, which is not limited.

In the embodiment of the disclosure, when the message data transmitted in the IM scenario is monitored in real time, and the message data to be processed is acquired in real time, the timeliness of recognizing an entity can be effectively realized. Therefore, a recognized target entity can be provided in a timely manner to the user of message interaction, so as to ensure the interaction experience of the user of message interaction.

In S102, entity mention information is obtained by processing the message data to be processed according to a multi-pattern matching method.

After obtaining the message data to be processed, the multi-pattern matching method can be used to process the message data to be processed, to obtain the entity mention information. The entity mention information may be a data segment that may involve an entity name and/or an entity alias in the message data to be processed. Alternatively, the entity mention information may also be a data segment that may involve entity-related attributes in the message data to be processed, which is not limited.

In some embodiments, when acquiring the message data to be processed, semantic understanding and recognizing may be performed on the message data to be processed to identify the entity mention information from the message data to be processed. Alternatively, the message data to be processed may be transmitted to a cloud platform, so that the entity mention information can be identified and obtained by the cloud platform based on big data analysis and processing technology. The entity mention information can be directly included in the message data to be processed, or, the entity mention information may be information linked by the semantic contents of the message data to be processed, which is not limited.

In the embodiment of the disclosure, in order to improve the recognition rationality and recognition efficiency of the entities involved in the message data, a multi-pattern matching method can be used to process the message data to be processed, to obtain the entity mention information.

The multi-pattern matching method refers to searching for multiple pattern strings simultaneously in a target character string. For example, the multi-pattern matching method includes: the Aho-Corasick automaton (AC automaton) algorithm, the two-dimensional array method, which is not limited.

In the embodiments of the disclosure, knowledge graph data in the message interaction scenario can be used to model and train the AC automaton or a two-dimensional array model in advance. The AC automaton or the two-dimensional array model obtained by training is used to perform recognition on the message data to be processed, to obtain data segments that may involve entity names and/or entity aliases in the message data to be processed as the entity mention information. Certainly, the knowledge graph data can also be used to model and train any other possible models in the multi-pattern matching method, to enable a multi-pattern matching method obtained by training to perform the task of recognizing the entity mention information, which is not limited.

In S103, one or more candidate entities associated with the entity mention information and entity description information corresponding to the one or more candidate entities are determined.

After the entity mention information is obtained by processing the message data to be processed based on the multi-pattern matching method, the one or more candidate entities associated with the entity mention information and the entity description information corresponding to the one or more candidate entities may be determined.

An entity associated with the entity mention information can be called a candidate entities. Association can refer to an association in dimensions such as a semantic dimension, a context dimension and a link dimension between a candidate entity and the entity mention information. The candidate entity may be the entity involved in the entity mention information. There may be ambiguity between different entities, thus, in the embodiments of the disclosure, the one or more candidate entities associated with the entity mention information may be determined first, and then an entity mentioned in the entity mention information may be determined from the associated candidate entities as a target entity. The target entity may belong to the candidate entities.

In the embodiments of the disclosure, the one or more candidate entities associated with the entity mention information are determined, and then the target entity can be subsequently determined from the one or more associated candidate entities, which can effectively simplify the amount of recognition calculation, improve the efficiency of entity recognition, and ensure that entity recognition can effectively meet the real-time requirements of the message interaction scenario.

After the one or more candidate entities associated with the entity mention information are determined as described above, the entity description information corresponding to the candidate entities may be determined. The entity description information is configured to describe the meaning, a type, a name, an alias, an attribute, an application scenario and extension information of each candidate entity.

In some embodiments, the entity description information corresponding to the candidate entity may be determined according to the knowledge graph data involved in the message interaction scenario. Alternatively, a preconfigured description model may be used to determine the entity description information corresponding to the candidate entity. Alternatively, the entity description information corresponding to the candidate entity may be extracted from entity-related data according to the entity-related data, which is not limited.

In S104, a target entity mentioned in the entity mention information is determined according to the message data to be processed and the entity description information.

After the entity description information corresponding to the one or more candidate entities is determined, the target entity mentioned in the entity mention information may be determined according to the message data to be processed and the entity description information.

For example, if there is only one candidate entity, the candidate entity can be directly determined as the target entity mentioned in the entity mention information. If there are multiple candidate entities, a contextual correlation between each candidate entity and the message data to be processed can be analyzed (for example, through a pattern matching method or a similarity analysis algorithm) according to the entity description information corresponding to each candidate entity, and a candidate entity with a relatively close correlation can be determined as the target entity. Alternatively, any other possible manner may also be used to determine the target entity mentioned in the entity mention information from the candidate entities, which is not limited.

In the embodiment, the message data to be processed is obtained. The multi-pattern matching method is used to process the message data to be processed to obtain the entity mention information. The one or more candidate entities associated with the entity mention information and the entity description information corresponding to the one or more candidate entities are determined. According to the message data to be processed and the entity description information, the target entity mentioned in the entity mention information can be determined, which can effectively improve the recognition rationality and recognition efficiency of the entity involved in the message data, and can effectively assist in acquiring knowledge related to the entity. Therefore, the expression effect of the message data and the effect of message interaction can be effectively improved.

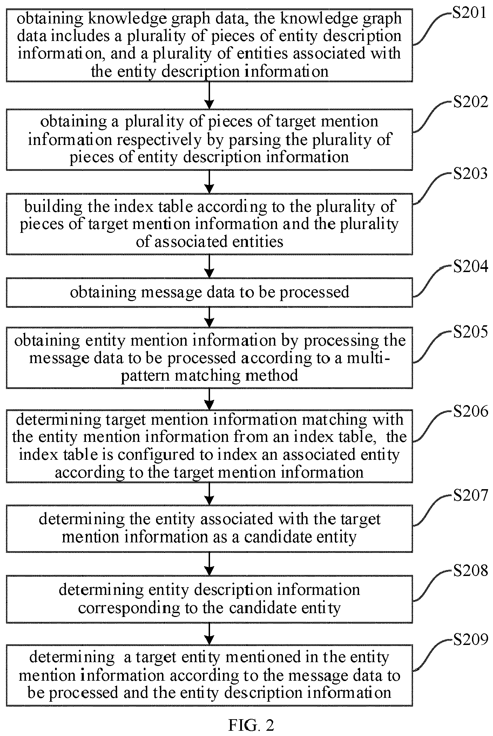

FIG. 2 is a flow chart of a method for recognizing an entity according to an embodiment of the disclosure.

As illustrated in FIG. 2, the method for recognizing an entity includes the following steps.

In S201, knowledge graph data is obtained, in which the knowledge graph data includes a plurality of pieces of entity description information, and a plurality of entities associated with the entity description information.

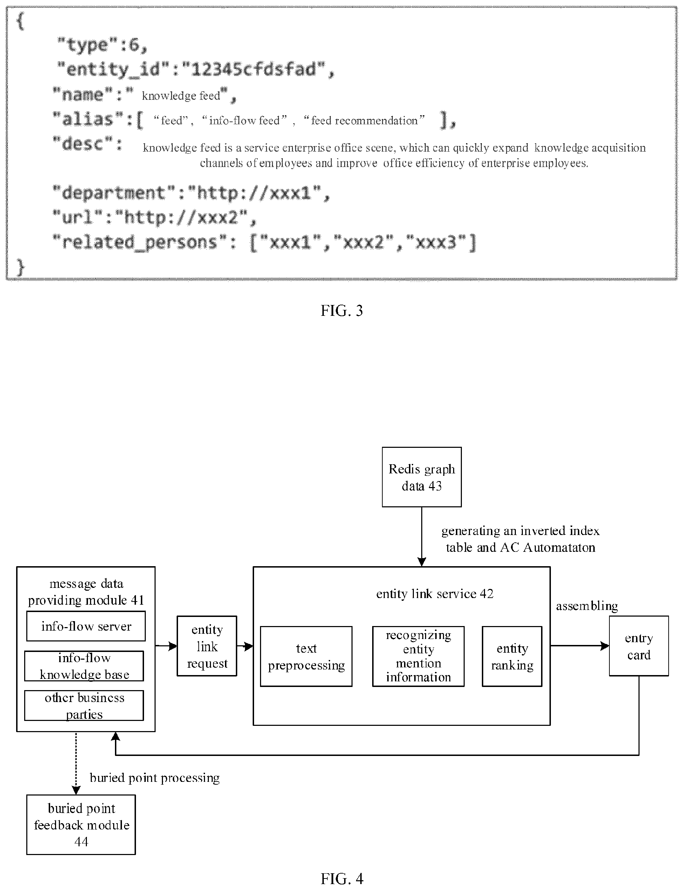

The knowledge graph data is knowledge data in the enterprise environment of the message interaction scenario. A form of the knowledge graph data can be as shown in FIG. 3. FIG. 3 is a schematic diagram of the entity description information in the embodiment of the disclosure. An example of the entity description information is given in FIG. 3. In practical applications, the knowledge graph data can be composed of a combination of the plurality of pieces of entity description information, which is not limited.

The entity description information in FIG. 3 includes: an entity type (i.e., type), an entity identifier (i.e., entity _id), an entity name (i.e., name), an entity alias (i.e., alias), description (i.e., desc), a department (i.e., department), a link (i.e., url) and related users (i.e., related_persons).

The plurality of entities associated with the entity description information can be, for example, the contents contained in the name and alias in FIG. 3, i.e., "knowledge feed", "feed", "info-flow feed" and "feed recommendation", which is not limited.

In the embodiments of the disclosure, the entity names and the entity aliases can be extracted from the entity description information shown in FIG. 3. According to the entity names and the entity aliases, an index table (such as an inverted index table) is established according to the entity description information, so that a set of possible candidate entities may be returned according to the entity mention information (mention). The set of candidate entities includes multiple candidate entities, which can be used as an input of a entity sorting module subsequently.

In S202, a plurality of pieces of target mention information is obtained respectively by parsing the plurality of pieces of entity description information.

In the embodiments of the disclosure, the plurality of pieces of entity description information can be parsed respectively, and all mappings between entities and aliases: entity: [name, alias_0, alias_1, ..., alias_n], can be obtained as the target mention information from the plurality of pieces of entity description information, where name represents a name of an entity, alias_0, alias_1, ..., alias n respectively represent multiple entity aliases corresponding to the entity. Then, the mappings between entities and entity aliases in combination with the entity itself are used to assist in the subsequent generation of the index table.

In S203, the index table is built according to the plurality of pieces of target mention information and the plurality of associated entities.

After parsing of the entity description information and determining all the mappings between entities and entity aliases, i.e., entity: [name, alias_0, alias_1, ..., alias n], as the target mention information by parsing each piece of the entity description information, one or more entities that the mappings between entities and entity aliases belongs to can be determined as the associated entities. Then the index table can be built according to the mapping between entities and entity aliases in combination with the associated entities.

For example, firstly, the knowledge graph data of an enterprise can be queried to obtain all the mappings between entities and entity aliases, i.e., entity: [name, alias_0, alias_1, ..., alias_n]. The mappings between entities and entity aliases are listed in an inversion order, and the entity names and the entity aliases are used as the target mention information (i.e., mention), to establish an inverted index table, i.e., mention: [entity_0, entity_1, ..., entity_n]. Each target mention information (i.e., mention) may be associated with one or more entities.

Therefore, before acquiring the message data to be processed, the knowledge graph data is obtained, the knowledge graph data includes the plurality of pieces of entity description information and the plurality of entities respectively associated with the entity description information, the plurality of pieces of target mention information is obtained by parsing the plurality of pieces of entity description information respectively, and the index table is built according to the plurality of pieces of target mention information and the plurality of associated entities, which can assist subsequent rapid determination of the candidate entities associated with the entity mention information. Moreover, the index table is built with reference to the knowledge graph data of the enterprise, the advantages of accuracy, diversity and scalability of the knowledge graph data can be fully utilized in the process of entity recognition to assist entity recall and sorting, thus the accuracy of entity recognition and the effect of entity recognition can be effectively guaranteed.

Certainly, any other possible way can also be used to build a data structure table having an indexing function, or a recognition model for recognizing candidate entities associated with the entity mention information may be established based on the knowledge graph data of the enterprise, to assist subsequent determination of candidate entities based on the data structure table or the recognition model, which is not limited.

In the embodiments of the disclosure, the above AC automaton (the AC automaton is a multi-pattern matching algorithm) can also be trained according to the knowledge graph data, so that the AC automaton obtained by training has the function of matching the entity mention information from the center of the message data to be processed.

For example, to establish an AC automaton, firstly, the knowledge graph data of the enterprise is queried to obtain the mappings between names and aliases of all entities in the knowledge graph data, i.e., entity: [name, alias_0, alias_1, ..., alias_n], and then all the mappings between names and aliases are inserted into the AC automaton as the entity mention information, which is not limited.

After the index table and the AC automaton are established based on the knowledge graph data, the index table and AC automaton can be updated dynamically according to change of the message interaction business scenario, so as to ensure auxiliary recognition effect of the index table and the AC automaton.

In S204, message data to be processed is obtained.

In S205, entity mention information is obtained by processing the message data to be processed according to a multi-pattern matching method.

For the description of S204-S205, reference may be made to the foregoing embodiments, and details are not repeated here.

In S206, target mention information matching with the entity mention information is determined from an index table, in which the index table is configured to index an associated entity according to the target mention information.

The above index table (for example, an inverted index table) established based on the knowledge graph data of the enterprise includes a plurality of pieces of target mention information and entities respectively associated with the plurality of pieces of target mention information. In this embodiment, after obtaining the entity mention information by parsing the message data to be processed, the entity mention information can be compared with each piece of the target mention information in the index table, to determine the target mention information matching the entity mention information. According to the index of the index table, the entity associated with the target mention information matching with the entity mention information is determined as a candidate entity.

In S207, the entity associated with the target mention information is determined as the candidate entity.

In this embodiment, the target mention information that matches the entity mention information is determined based on the above index table, and the entity associated with the determined target mention information is determined as the candidate entity, thus, it is possible to quickly determine the candidate entity associated with the entity mention information, and the determined candidate entity is obtained in advance by parsing the knowledge graph data, so that the candidate entity can be adapted to the knowledge background of the enterprise, and the entity recognition can meet personalized requirements of the message interaction scenario.

In S208, entity description information corresponding to the candidate entity is determined.

In S209, a target entity mentioned in the entity mention information is determined according to the message data to be processed and the entity description information.

For the description of S208-S209, reference may be made to the foregoing embodiments, and details are not repeated here.

In this embodiment, the knowledge related to the entity can be effectively obtained, the expression effect of the message data can be effectively improved, so that the message interaction effect can be improved. Before obtaining the message data to be processed, the knowledge graph data is obtained, the knowledge graph data includes the plurality of pieces of entity description information and the plurality of entities respectively associated with the entity description information, the plurality of pieces of target mention information is obtained by parsing the plurality of pieces of entity description information respectively, and the index table is built according to the plurality of pieces of target mention information and the plurality of associated entities, which assists subsequent rapid determination of the candidate entities associated with the entity mention information. Moreover, the index table is built based on the knowledge graph data of the enterprise, the advantages of accuracy, diversity and scalability of the knowledge graph data can be fully utilized in the process of entity recognition to assist entity recall and sorting, thus the accuracy of entity recognition and the effect of entity recognition can be effectively guaranteed. The above index table is used to determine the target mention information that matches the entity mention information, and the entity associated with the determined target mention information is determined as the candidate entity, thus it is possible to quickly determine the candidate entity associated with the entity mention information, and the determined candidate entities are obtained in advance by parsing the knowledge graph data, so that the candidate entities can be adapted to the knowledge background of the enterprise, and the entity recognition can meet personalized requirements of the message interaction scenario.

FIG. 4 is a schematic diagram of an application scenario of a method for recognizing an entity in the embodiment of the disclosure. As illustrated in FIG. 4, a message data providing module 41 is provided. The message data providing module 41 may include: an info-flow server (such as an info-flow server side), an info-flow knowledge base and other business parties. The message data providing module 41 is configured to provide the message data. When acquiring the message data to be processed, the message data providing module 41 may generate an entity link request, and send it to an entity link service 42, an entity link task is performed by the entity link service 42. The entity link service 42 may build the inverted index table and the AC automaton in advance based on remote dictionary service (Redis) graph data 43 to assist text preprocessing (which refers to subsequent embodiments), entity mention information recognition and entity ranking. After the target entity is recognized, the target entity and the entity description information can be assembled into an entry card for display. In FIG. 4, a buried point feedback module 44 is included. Buried point is also known as event tracking. After the entry card is obtained, event tracking processing can be performed on a text (i.e., the message data in the form of text) containing the target entity through the buried point feedback module 44.

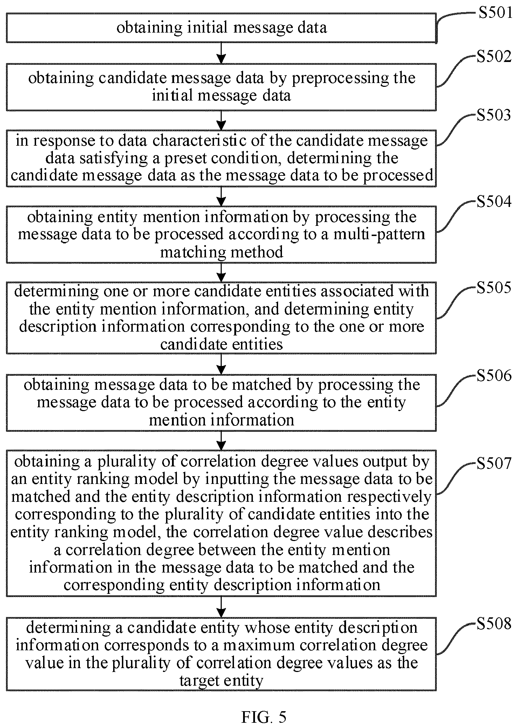

FIG. 5 is a flow chart of a method for recognizing an entity according to an embodiment of the disclosure.

As illustrated in FIG. 5, the method for recognizing an entity includes the following steps.

In S501, initial message data is obtained.

Message data directly captured in real time from the IM scenario may be referred to as the initial message data, and then a subsequent step of preprocessing the initial message data may be triggered.

In S502, candidate message data is obtained by preprocessing the initial message data.

After the initial message data is directly captured in real time from the IM scenario, the initial message data can be preprocessed to obtain the candidate message data, which can effectively improve the throughput of the entity link online service and can avoid impact of interference message data on entity links.

It is understandable that, according to the statistics of the message data in the IM scenario, there may be some message data that do not contain the entity mention information, and such message data is usually in the form of uniform resource locator (URL), JavaScript object notation (JSON) data, configuration data (for example, extensible markup language (XML)), training data samples, errors logs, paths, code segments machine names, and the like. In order to improve the performance of the entity link service, in the embodiments of the disclosure, the initial message data may be preprocessed, and the message data obtained by the preprocessing may be determined as the candidate message data.

Optionally, in some embodiments, obtaining the candidate message data by preprocessing the initial message data may be as follows. A first data segment of a first type is identified from the initial message data, and type conversion is performed on the first data segment to obtain a second data segment of a second type, the first type and the second type are different. The second data segment is used to replace the first data segment in the initial message data, to obtain the candidate message data, so as to effectively assist the subsequent decision processing logic for whether it is possible for the message data to mention an entity, and effectively reduce the calculation amount of the decision processing logic, thereby ensuring rationality and reliability of the decision processing logic.

The above type conversion may refer to converting the first data segment of the first type into the second data segment of the second type, so that the second data segment is represented as a regular expression of the first data segment, or any other possible expression form. The first type may be a URL type, a path type, a mark type (for example, @ type). The data presented in the first type in the initial message data may be referred to as the first data. After identifying the first data of the first type in the initial message data, the first data of the URL type, the path type, and the mark type (for example, the @ type) may be converted into regular-expression data, and the regular-expression data may be referred to as the second data.

For example, preprocessing the initial message data (for example, the form of the initial message data is the text form) can be as follows:
1. replacing the URL in the initial message data with a regular expression; and
2. replacing the path in the initial message data with a regular expression.
   For example, the path may be:
   /home/so_km_tuijian/wanfan01/merge_result_log/get_mergeResult_data.py.
3. if there are a large amount of first data of @ type, two or three words after the @ character can be deleted.
4. replacing an internet protocol (IP) address and a machine name in the initial message data with a regular expression.

Certainly, the initial message data can also be preprocessed in any other possible manner, for example, the manner of performing semantic analysis, context association, feature matching, and model prediction on the initial message data, which is not limited.

In S503, in response to data characteristic of the candidate message data satisfying a preset condition, the candidate message data is determined as the message data to be processed.

After preprocessing the above initial message data to obtain the candidate message data, it can be determined whether the candidate message data carries the entity mention information.

It can be understood that, generally, the entity mention information includes a certain length or a proportion of a preset character. In the embodiment, the data characteristic of the candidate message data (for example, a length characteristic of the candidate message data, and/or a preset character proportion characteristic, or any other characteristic that can characterize the dimension of the data, which is not limited) can be analyzed, and the data characteristic can be compared with the preset condition (the preset condition can be adaptively configured according to the requirements of the message interaction scenario, which is not limited). If the data characteristic satisfies the preset condition, it is determined that the candidate message data carries the entity mention information, so that the candidate message data is determined as the message data to be processed, otherwise the candidate message data can be filtered out.

In the embodiment, the data characteristic is configured as the length characteristic of the candidate message data, and/or the preset character proportion characteristic, which can effectively characterize the characteristics of the data dimension of the message data. When using the length characteristic and/or the preset character proportion characteristic to assist in determining that the candidate message data carries the entity mention information, the rationality of the determination and the accuracy of the determination can be effectively guaranteed.

For example, the filtering processing of the message data can be as following.

If a length characteristic (a length value) of a piece of preprocessed candidate message data is greater than 500, this candidate message data can be filtered out. If the length feature (the length value) of the piece of preprocessed candidate message data is less than 5, the candidate message data can be filtered out. That is, it is configured that the preset condition is that the length value is less than or equal to 500 and greater than or equal to 5. If the preset character proportion characteristic (a proportion of an English character) in the preprocessed candidate message data is less than 30%, the candidate message data can be filtered out, that is, it is configured that the preset condition is that the proportion of the English character is greater than or equal to 30%. The preset condition may be configured as other values according to actual requirements, which is not limited.

In this embodiment, the initial message data is obtained. The initial message data is preprocessed to obtain the candidate message data. In response to the data characteristic of the candidate message data satisfies the preset condition, the candidate message data is determined as the message data to be processed, which makes it possible to accurately determine whether an entity is mentioned in the message data. When it is determined that the entity is mentioned in the message data, subsequent parsing of the entity mention information is triggered, and if the entity is not mentioned in the message data, the message data can be filtered out directly, which can effectively guarantee hit accuracy of the method for recognizing an entity and reduce the consumption of software and hardware resources by the method. In addition, when the method for recognizing an entity is applied in the message interaction scenarios, the rationality and applicability of entity recognition is effectively guaranteed.

In S504, entity mention information is obtained by processing the message data to be processed according to a multi-pattern matching method.

In S505, one or more candidate entities associated with the entity mention information and entity description information corresponding to the one or more candidate entities are determined.

For the description of S504-S505, reference may be made to the above embodiments, and details are not repeated here.

In this embodiment of the disclosure, if the number of candidate entities associated with the entity mention information is determined to be one, the candidate entity can be directly determined as the target entity. If there are multiple candidate entities, the subsequent steps S506-S508 can be triggered.

In S506, message data to be matched is obtained by processing the message data to be processed according to the entity mention information.

The steps of S506-S508 in this embodiment can be regarded as a process of sorting the candidate entities. After the sorting, a candidate entity that is ranked first can be selected as the target entity.

For example, if there is only one candidate entity, the candidate entity is returned directly. If there are more than one candidate entities, the candidate entity ranked first is returned through the entity ranking model. For example, if the entity mention information (mention)=feed, multiple candidate entities may be recalled, such as, [APP 1 feed], [APP 2 feed] and [ APP 3 feed], a candidate entity ranked first can be selected from [APP 1 feed], [APP 2 feed] and [ APP 3 feed] as the target entity mentioned by the entity mention information.

In this embodiment, after identifying the entity mention information, the entity mention information can be used to process the message data to be processed, to obtain the message data to be matched, so that it can facilitate the entity ranking model to identifying the entity mention information in the message data to be matched.

For example, the entity mention information in the message data to be matched can be marked in anteroposterior positions with "#", and the message data carrying the mark can be determined as the message data to be matched that is input into the entity ranking model.

For example, the message data to be matched is provided as follows:
[The new version is released, please go to the Knowledge Square to experience the new version of #feed#, and give your feedback], where "#" is used to mark the anteroposterior positions of the entity mention information.

In S507, a plurality of correlation degree values output by an entity ranking model are obtained by inputting the message data to be matched and the entity description information respectively corresponding to the plurality of candidate entities into the entity ranking model, in which the correlation degree value describes a correlation degree between the entity mention information in the message data to be matched and the corresponding entity description information.

The entity ranking model may be an AI model, and the AI model may be, for example, a neural network model or a machine learning model, which is not limited.

The entity ranking model can be obtained by pre-training, and the following is a description of the process of pre-training the entity ranking model.

An initial AI model is obtained firstly. For example, the initial AI model may be a pre-trained model such as Ernie model. Then sample data (such as sample message data, sample entity mention information included in the sample message data, sample entity description information) is prepared.

The sample message data is built.

The sample message data is used as the input of the initial AI model. Position information of the sample entity mention information (mention) in the sample message data may be input into the AI model, so that the AI model can determine the specific position of the sample entity mention information (mention) in the sample message data.

For example, the uniform identifier "#" can be added in anteroposterior positions of the sample entity mention information (mention) in the sample message data. If mention=feed, examples of the sample message data are as follows.

Sample message data 1: [The new version is released, please go to the Knowledge Square to experience the new version of #feed#, and give your feedback].

Sample message data 2: [At seven o'clock this evening, a company application master will share a #feed# recommendation structure, please pay attention if interested].

All the sample mention information in the above examples of the sample message data can be [feed].

The sample entity description information is built. The sample entity description information may be, for example, triple SPO information of an entity subject (subject), a predicate and an obj ect.

The sample entity description information may include an entity standard name, an entity type, and entity-related SPO information corresponding to the sample entity reference information (mention) in the knowledge graph data of the enterprise background.

When the sample entity description information is built, the sample entity mention information (mention) and the entity standard name can be spliced with ":", and the splicing result is used as the input sample entity description information to inform the model whether the entity standard name and the mention are the same.

Moreover, the splicing result "type: entity type" is used as input sample entity description information.

In addition, the SPO information of the entity, for example, the entity description, the entity's department and other attribute values are spliced as the input sample entity description information.

For example, examples of the entity description information are provided as follows.

Sample entity description information 1: [feed: knowledge feed; type: product; intelligent office platform department; Knowledge feed, mainly serving for business office scenarios, which can quickly expand employees' knowledge acquisition channels and improve employees' office efficiency].

Sample entity description information 2: [feed: feed; type: defining vocabulary; universal; feed flow is an information outlet, when connecting with others or information, a lot of the desired information can be obtained simply by a refreshing action, and can be constantly updated].

After preparing the sample data (the sample message data, the sample entity mention information included in the sample message data, the sample entity description information), the sample message data and the sample entity mention information included in the sample message data can be used as a text segment Text_a, and the sample entity description information is used as a text segment Text_b. Text a and Text_b are spliced to obtain a spliced segment, and then the spliced segment is input into the initial AI model.

Then, a feature vector corresponding to the spliced segment, and a begin position and an end position of the sample entity mention information (mention) are encoded by a multi-layer transformer (Transformer), and then the output encoding vectors are spliced as the feature vectors of the entity ranking task. A score within [0, 1] output through the full connection layer and the activation layer can measure a similarity between the sample entity mention information (mention) in the sample message data and the candidate entity. The higher the score, the higher the possibility of being the target entity.

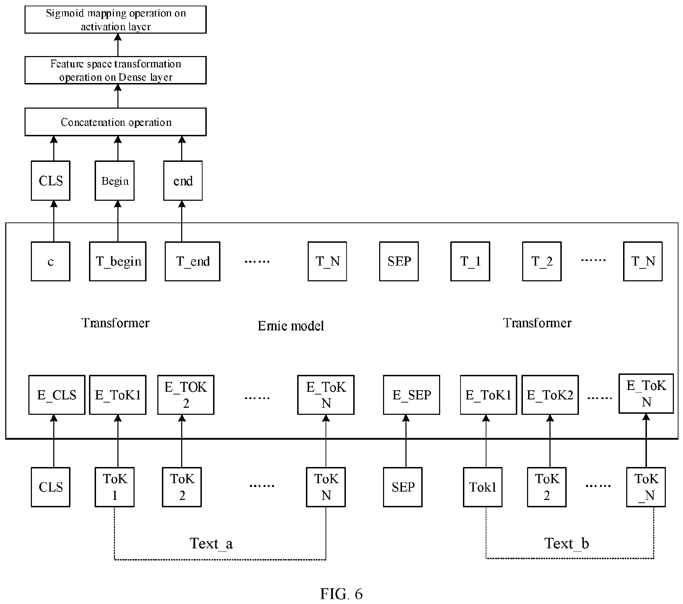

FIG. 6 is a schematic diagram of training an entity ranking model according to an embodiment of the disclosure. As illustrated in FIG. 6, for example, the entity ranking model is the Ernie model, the Ernie model includes: a multi-layer transformer (Transformer), configured to encode the input Text_a sand text Text b to obtain multiple encoding vectors. The multiple encoding vectors respectively correspond to the feature vector corresponding to the spliced segment, and the begin position and the end position of the sample entity mention information (mention). Some model processing operations are performed on the multiple encoding vectors, such as concatenation operations based on concatenation related neural networks, feature space transformation operations on the dense layer, and Sigmoid mapping operations on the activation layer.

It can be understood that, when training the entity ranking model, the input is the sample message data marked with the sample entity mention information, and the sample entity description information, and the output is a prediction value of correlation. The prediction value represents a correlation between the sample entity mention information in the sample message data and the sample entity description information. Therefore, when the trained entity ranking model is used in this embodiment, the message data to be matched and the entity description information respectively corresponding to the plurality of candidate entities can be input into the entity ranking model, so as to obtain multiple correlation degree values output by the entity ranking model, the correlation degree value is a correlation degree value predicted by the model. The correlation degree value describes the correlation degree between the entity mention information in the message data to be matched and the corresponding entity description information.

In S508, a candidate entity whose entity description information is a maximum correlation degree value of the plurality of correlation degree values is determined as the target entity.

After predicting and obtaining the plurality of correlation degree values respectively corresponding to the multiple pieces of entity description information, the candidate entity whose entity description information corresponds to the maximum correlation degree value of the plurality of correlation degree values is determined as the target entity.

Therefore, when the number of candidate entities is more than one, the message data to be processed is processed based on the entity mention information to obtain the message data to be matched. The message data to be matched and the entity description information are input into the entity ranking model to obtain the plurality of correlation degree values output by the entity ranking model. The correlation degree value describes the correlation degree between the entity mention information in the message data to be matched and the entity description information. The candidate entity whose entity description information corresponds to the maximum correlation degree value of the plurality of correlation degree values is determined as the target entity. In this way, an entity ranking model suitable for the message interaction scenarios can be established based on the knowledge graph data of the enterprise. When the entity ranking model is used to assist in predicting the target entity mentioned in the entity mention information, a more accurate entity recognition effect can be achieved, the identification efficiency of entity mentioned in the entity mention information in the message data is greatly improved, and the entity identification logic is integrated with the message interaction scenarios.

In the embodiments of the disclosure, in order to ensure that the entity ranking model obtained by training is suitable for the real-time requirements of message interaction scenarios, a model distillation method can be used to reduce structural complexity of the entity ranking model, which is convenient for online deployment. The method for recognizing an entity in the embodiments of the disclosure also has strong practical significance and high scalability, and is easily extended to entity linking scenarios in other scenarios.

For example, the model distillation method is mainly divided into the following three stages.
(1) The parameters of the AI model with complex structure are fine-tuned based on the sample data, to obtain a teacher model of the entity ranking model.
(2) The output and attention matrix of the transformer layer in the teacher model are distilled by using a student model commonly used in the AI model. The fitting goals at this stage include: a loss value of the output of the transformer layer of the teacher model and a loss value of the output of the transformer layer of the student model; a loss value of the attention matrix of the teacher model and a loss value of the attention matrix of the student model, back-propagation training phase is based on the loss value of the attention matrix of the teacher model and the loss value of the attention matrix of the student model, and parameters of the student model are updated in the back-propagation training phase.
(3) The student model is trained and obtained by distilling the prediction layer.

The fitting goals at this stage include: a cross entropy between an output of a prediction layer of the student model and an output of a prediction layer of the teacher model; a cross entropy between the output of the prediction layer of the student model and a real label; update of the parameters of the student model in the back-propagation training stage, while the parameters of the teacher model may not be updated.

In this embodiment, the knowledge related to the entity can be acquired effectively, the expression effect of the message data can be effectively improved, and the message interaction effect can be improved effectively. The initial message data is obtained, and the initial message data is preprocessed to obtain the candidate message data. If the data characteristic of the candidate message data satisfies the preset condition, the candidate message data is determined as the message data to be processed, which makes it possible to determine whether the message data mentions an entity. When it is determined that the entity is mentioned, subsequent parsing of the entity mention information is triggered, and if no entity is mentioned, the message data can be filtered out directly, which can effectively guarantee hit accuracy of the method for recognizing an entity and reduce the consumption of software and hardware resources by the method. In addition, when the method for recognizing an entity is used in the message interaction scenarios, the rationality and applicability of entity recognition is effectively guaranteed. In this way, the entity ranking model suitable for the message interaction scenarios can be built based on the knowledge graph data of the enterprise. When the entity ranking model is used to assist in predicting the target entity mentioned in the entity mention information, a more accurate entity recognition effect can be achieved, the identification efficiency of entities mentioned in the entity mention information in the message data is greatly improved, and the entity identification logic is integrated with the message interaction scenarios.

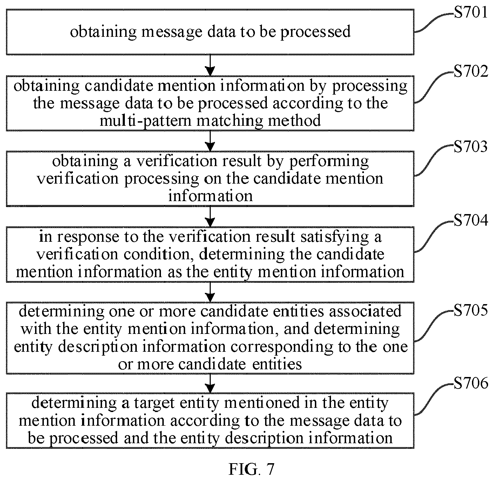

FIG. 7 is a flow chart of a method for recognizing an entity according to an embodiment of the disclosure.

As illustrated in FIG. 7, the method for recognizing an entity includes the following steps.

In S701, message data to be processed is obtained.

For the description of S701, reference may be made to the foregoing embodiments, and details are not repeated here.

In S702, candidate mention information is obtained by processing the message data to be processed according to a multi-pattern matching method.

In this embodiment, mention information obtained by using the multi-pattern matching method to process the message data to be processed may be determined as the candidate mention information, and then a subsequent step of performing verification processing on the candidate mention information is triggered.

The AC automaton built above can be used to perform multi-modal matching to obtain all mention information in the message data to be processed, and all the obtained mention information is determined as the candidate mention information.

In S703, a verification result is obtained by performing verification processing on the candidate mention information.

In this embodiment, the mention information obtained by using the multi-pattern matching method to process the message data to be processed can be determined as the candidate mention information, and then performing the verification processing on the candidate mention information is triggered to obtain the verification result. Thus, the accuracy verification of the candidate mention information can be realized according to the verification result. When the successfully verified candidate mention information is used as the entity mention information, the accuracy and identification efficiency of the entity mention information can be effectively guaranteed, thereby ensuring the accuracy of target entity identification to a greater extent.

Optionally, in some embodiments, performing the verification processing on the candidate mention information may be as follows. Word segmentation verification is performed on the candidate mention information when the candidate mention information is of a first information type. When the candidate mention information is of a second information type, the word neighborhood verification is performed on the candidate mention information. The first information type and the second information type are different. Therefore, in this embodiment, personalized verification can be performed for the candidate mention information according to the information type of the candidate mention information, which effectively improves the flexibility of verifying the candidate mention information, and effectively improves the possibility of the verification result as a reference.

The first information type indicates that the entity mention information contains Chinese. The second information type indicates that the entity mention information is composed of characters only, for example, all the entity mention information is English characters, or all the entity mention information is Arabic characters, which is not limited.

For example, when the word segmentation verification is performed on the candidate mention information, the candidate mention information can be input into a pre-trained word segmentation model to segment the candidate mention information, so as to obtain multiple candidate words. Each candidate segmented word is verified separately to obtain a verification result. Any other possible method may be used to perform word segmentation verification on the candidate mention information, which is not limited.

For example, when performing word neighborhood verification on the candidate mention information, reasonable neighbor words corresponding to the candidate mention information can be analyzed based on the semantic contents of the candidate mention information, that is, a start word and an end word matching the semantic contents. Then, based on the start word and the end word, it is determined whether the candidate mention information can be determined to pass the verification, so as to obtain the verification result, or any other possible method can also be used to perform the word neighborhood verification on the candidate mention information, which is not limited.

Optionally, in some embodiments, when performing the word segmentation verification on the candidate mention information, word segmentation processing may be performed on the message data to be processed to obtain multiple words. If the candidate mention information matches a first word, it is determined that the verification result of the word segmentation verification satisfies the verification condition (that is, the verification condition is that the candidate mention information matches any word in the message data to be processed), and the first word belongs to the multiple words obtained by the word segmentation. Therefore, the convenience of the word segmentation verification can be effectively improved, and the efficiency of the word segmentation verification can be optimized to a greater extent while ensuring the verification accuracy.

In the multiple words obtained by the word segmentation, a word that matches the candidate mention information (semantic matching or regular matching) can be called the first word.

For example, the message data to be processed can be, for example, "How to deploy an Ernie model on paddlecloud?", then multiple words are obtained by performing word segmentation on the message data to be processed, i.e., [paddlecloud] [how] [deploy] [Ernie] [model]. The candidate mention information is: [paddle] [Ernie], then the multiple words do not contain [paddle], the candidate mention information [paddle] can be filtered, and the multiple words contain [Ernie], the candidate mention information [Ernie] is determined as the entity mention information. The above are only an example, which is not limitation to the disclosure.

Optionally, in some embodiments, when performing the word neighborhood verification on the candidate mention information, it may be determined that the verification result of the word neighborhood verification satisfies the verification condition when the candidate mention information is untruncated information. That is, the verification condition is that the candidate mention information is untruncated information. Thus, it can effectively improve the convenience of the word neighborhood verification, and optimize the efficiency of word neighborhood verification to a large extent while ensuring the verification accuracy.

The untruncated information indicates that the candidate mention information contains complete semantics, rather than being truncated from a whole word.

For example, if the information type of the candidate mention information is the second information type, the second information type indicates that the entity mention information is composed of only characters. For example, the entity mention information is composed entirely of English characters, or the entity mention information is composed of Arabic characters only. Taking the second type where the candidate mention information is composed of only English characters as an example, when performing the word neighborhood verification, a previous character and a latter character of the candidate mention information (mention) are verified. If there is at least one English character in the previous character and the latter character of the candidate mention information, it indicates that the candidate mention information is truncated information (that is, the candidate mention information is truncated from a whole word). Then it can be determined that the candidate mention information does not meet the verification condition, and the candidate mention information can be filtered. If there is no English character in the previous character and the latter character, verification on the previous character and the latter character can be continued. If there is a symbol such as "-" and "." that may indicate truncated information, the candidate mention information can be determined as truncated information and may be filtered. If both of the foregoing two conditions are verified successfully, i.e., not determined as the truncated information based on the foregoing two conditions, it indicates that the verification result of the word neighborhood verification satisfies the verification condition.

In S704, in response to the verification result satisfying a verification condition, the candidate mention information is determined as the entity mention information.

After performing the verification process on the candidate mention information to obtain the verification result, if the verification result satisfies the verification condition, the candidate mention information is regarded as the entity mention information, and if the verification result does not satisfy the verification condition, the candidate mention information can be filtered.

In S705, one or more candidate entities associated with the entity mention information and entity description information corresponding to the one or more candidate entities are determined.

In S706, a target entity mentioned in the entity mention information is determined according to the message data to be processed and the entity description information.

For the description of S705-S706, reference may be made to the foregoing embodiments, and details are not repeated here.

In this embodiment, the knowledge related to the entity can be effectively acquired, the expression effect of the message data can be effectively improved, and the message interaction effect can be improved. By using the multi-pattern matching method to process the message data to be processed, the obtained mention information is regarded as the candidate mention information. Then, the verification processing of the candidate mention information is triggered to obtain the verification result, so that the accuracy of the candidate mention information can be verified according to the verification result. When the successfully verified candidate mention information is determined as the entity mention information, the identification accuracy and efficiency of the entity mention information can be effectively guaranteed, so as to ensure the accuracy of target entity identification to a greater extent.

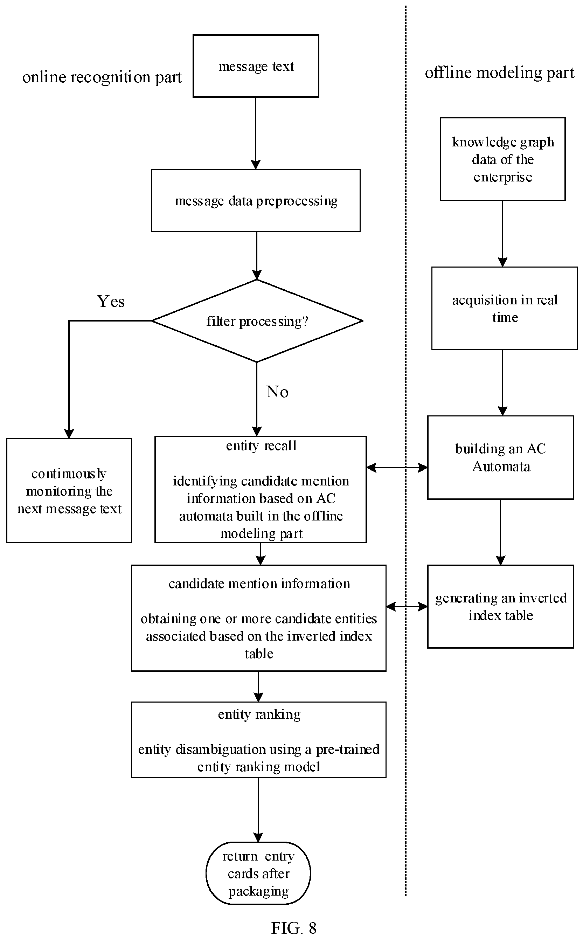

FIG. 8 is a schematic diagram of application of a method for recognizing an entity according to an embodiment of the disclosure. As illustrated in FIG. 8, the method for recognizing an entity includes two parts, namely an online recognition part and an offline modeling part. The online recognition part can include: message data preprocessing, entity recall, and entity ranking. The offline modeling part includes acquiring knowledge graph data, building an AC automata and building an inverted index table.

In FIG. 8, in the offline modeling part, the knowledge graph data of the enterprise can be obtained in real time, and the AC automaton can be built and updated according to the knowledge graph data obtained in real time (the local storage of the AC automaton can include all the involved the candidate mention information). The inverted index table (the inverted index table may include all the candidate mention information involved, and the corresponding associated entities) is built and updated, and the AC automaton and the inverted index table can be used for online entity recognition.

In the online identification part, the initial message data can be received (for example, the initial message data is the message text), and the message text can be preprocessed. If the message text is filtered directly, the next message text can be monitored continuously. If the message text is retained after the verification, the candidate mention information can be identified from the message text based on the AC automaton built in the offline modeling part. Multiple verification processing is performed on the candidate mention information to obtain the entity mention information, and then one or more associated candidate entities are obtained based on the entity mention information and the inverted index table. When multiple candidate entities are obtained, the pre-trained entity ranking model is used to perform entity disambiguation, and the entry cards are returned after packaging.

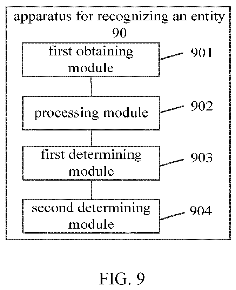

FIG. 9 is a block diagram of an apparatus for recognizing an entity according to an embodiment of the disclosure..

As illustrated in FIG. 9, an apparatus for recognizing an entity 90 includes: a first obtaining module 901, a processing module 902, a first determining module 903 and a second determining module 904.

The first obtaining module 901 is configured to obtain message data to be processed.

The processing module 902 is configured to obtain entity mention information by processing the message data to be processed according to a multi-pattern matching method.

The first determining module 903 is configured to determine one or more candidate entities associated with the entity mention information and entity description information corresponding to the one or more candidate entities.

The second determining module 904 is configured to determine a target entity mentioned in the entity mention information according to the message data to be processed and the entity description information.

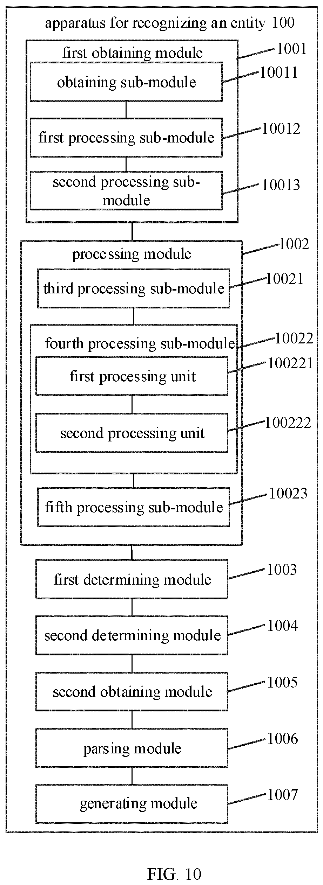

In some embodiments of the disclosure, FIG. 10 is a block diagram of an apparatus for recognizing an entity according to an embodiment according to the disclosure. As illustrated in FIG. 10, an apparatus for recognizing an entity 100 includes: a first obtaining module 1001, a processing module 1002, a first determining module 1003 and a second determining module 1004.

The second determining module 1004 is configured to:
obtain message data to be matched by processing the message data to be processed according to the entity mention information;
obtain a plurality of correlation degree values output by an entity ranking model by inputting the message data to be matched and the entity description information respectively corresponding to the plurality of candidate entities into the entity ranking model, in which the correlation degree value describes a correlation degree between the entity mention information in the message data to be matched and the corresponding entity description information; and
determine a candidate entity whose entity description information corresponds to a maximum correlation degree value of the plurality of correlation degree values as the target entity.

In some embodiments of the disclosure, the first determining module 1003 is configured to:
determine target mention information matching with the entity mention information from an index table, in which the index table is configured to index an associated entity according to the target mention information; and
determine the entity associated with the target mention information as the candidate entity.

In some embodiments of the disclosure, the apparatus for recognizing an entity 100 further includes: a second obtaining module 1005, a parsing module 1006 and a building module 1007.

The second obtaining module 1005 is configured to, before obtaining the message data to be processed, obtain knowledge graph data, in which the knowledge graph data includes a plurality of pieces of entity description information, and a plurality of entities associated with the entity description information.

The parsing module 1006 is configured to obtain a plurality of pieces of target mention information respectively by parsing the plurality of pieces of entity description information.

The building module 1007 is configured to build the index table according to the target mention information and the plurality of associated entities.

In some embodiments of the disclosure, the first obtaining module 1001 includes: an obtaining sub-module 10011, a first processing sub-module 10012 and a second processing sub-module 10013.

The obtaining sub-module 10011 is configured to obtain initial message data.

The first processing sub-module 10012 is configured to obtain candidate message data by preprocessing the initial message data.

The second processing sub-module 10013 is configured to, in response to data characteristics of the candidate message data satisfying a preset condition, determine the candidate message data as the message data to be processed.

In some embodiments of the disclosure, the first processing sub-module 10012 is configured to:
identify a first data segment of a first type from the initial message data;
obtain a second data segment of a second type by performing type conversion on the first data segment, wherein the first type is different from the second type; and
obtain the candidate message data by replacing the first data segment in the initial message data with the second data segment.

In some embodiments of the disclosure, the data characteristic includes a length characteristic of the candidate message data and/or a preset character proportion characteristic.

In some embodiments of the disclosure, the processing module 1002 includes: a third processing sub-module 10021, a fourth processing sub-module 10022 and a fifth processing sub-module 10023.

The third processing sub-module 10021 is configured to obtain candidate mention information by processing the message data to be processed according to the multi-pattern matching method.

The fourth processing sub-module 10022 is configured to obtain a verification result by performing verification processing on the candidate mention information.

The fifth processing sub-module 10023 is configured to, in response to the verification result satisfying a verification condition, determine the candidate mention information as the entity mention information.

In some embodiments of the disclosure, the fourth processing sub-module 10022 includes: a first processing unit 100221 and a second processing unit 100222.

The first processing unit 100221 is configured to, in response to the candidate mention information being a first information type, perform word segmentation verification on the candidate mention information.

The second processing unit 100222 is configured to, in response to the candidate mention information being a second information type, perform word neighborhood verification on the candidate mention information, in which the first information type is different from the second information type.

In some embodiments of the disclosure, the first processing unit 100221 is configured to:
perform word segmentation processing on the message data to be processed to obtain a plurality of words; and
in response to the candidate mention information matching a first word, determine that a verification result of the word segmentation verification satisfies the verification condition, in which the first word belongs to the plurality of words.

In some embodiments of the disclosure, the second processing unit 100222 is configured to:
in response to the candidate mention information being untruncated information, determine that a verification result of the word neighborhood verification satisfies the verification condition.

It is understood that, in the apparatus for recognizing an entity 100 in the embodiment of FIG. 10 and the apparatus 90 for recognizing an entity in the above embodiments, the first obtaining module 1001 and the first obtaining module 901 in the above-mentioned embodiments may have the same function and structure, the processing module 1002 and the processing module 902 in the above embodiments may have the same function and structure, the first determining module 1003 and the first determining module 903 in the above embodiments may have the same function and structure, and the second determining module 1004 and the second determining module 904 in the above embodiments may have the same function and structure.

It should be noted that the foregoing explanation of the method for recognizing an entity is also applicable to the apparatus for recognizing an entity of this embodiment, and details are not repeated here.

In the embodiment, the message data to be processed is obtained. The entity mention information is obtained by processing the message data to be processed according to the multi-pattern matching method. The one or more candidate entities associated with the entity mention information and the entity description information corresponding to the one or more candidate entities are determined. The target entity mentioned in the entity mention information is determined according to the message data to be processed and the entity description information. In this way, the recognition rationality and recognition efficiency of the entities involved in the message data can be effectively improved, so as to effectively assist in acquiring knowledge related to the entities, improving the expression effect of the message data, and improving the message interaction effect.

According to the embodiments of the disclosure, the disclosure also provides an electronic device, a readable storage medium and a computer program product.

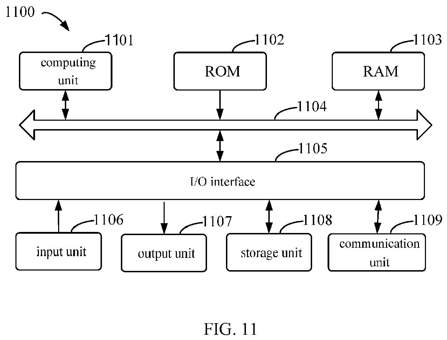

FIG. 11 is a block diagram of an example electronic device used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 11, the device 1100 includes a computing unit 1101 performing various appropriate actions and processes based on computer programs stored in a read-only memory (ROM) 1102 or computer programs loaded from the storage unit 1108 to a random access memory (RAM) 1103. In the RAM 1103, various programs and data required for the operation of the device 1100 are stored. The computing unit 1101, the ROM 1102, and the RAM 1103 are connected to each other through a bus 1104. An input/output (I/O) interface 1105 is also connected to the bus 1104.

Components in the device 1100 are connected to the I/O interface 1105, including: an inputting unit 1106, such as a keyboard, a mouse; an outputting unit 1107, such as various types of displays, speakers; a storage unit 1108, such as a disk, an optical disk; and a communication unit 1109, such as network cards, modems, and wireless communication transceivers. The communication unit 1109 allows the device 1100 to exchange information/data with other devices through a computer network such as the Internet and/or various telecommunication networks.

The computing unit 1101 may be various general-purpose and/or dedicated processing components with processing and computing capabilities. Some examples of computing unit 1101 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 1101 executes the various methods and processes described above, such as the method for recognizing an entity. For example, in some embodiments, the method may be implemented as a computer software program, which is tangibly contained in a machine-readable medium, such as the storage unit 1108. In some embodiments, part or all of the computer program may be loaded and/or installed on the device 1100 via the ROM 1102 and/or the communication unit 1109. When the computer program is loaded on the RAM 1103 and executed by the computing unit 1101, one or more steps of the method described above may be executed. Alternatively, in other embodiments, the computing unit 1101 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in a cloud computing service system, in order to solve the existing defects of difficult management and weak business expansion in traditional physical hosting and virtual private server (VPS) services. The server can also be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for recognizing an entity, comprising:
obtaining message data to be processed (S101; S204; S701);
obtaining entity mention information by processing the message data to be processed according to a multi-pattern matching method (S102; S205; S504);
determining one or more candidate entities associated with the entity mention information, and determining entity description information corresponding to the one or more candidate entities (S103; S505;S705); and
determining a target entity mentioned in the entity mention information according to the message data to be processed and the entity description information (S104;S209; S706).

2. The method of claim 1, wherein there are a plurality of candidate entities, and determining the target entity mentioned in the entity mention information according to the message data to be processed and the entity description information (S104;S209; S706) comprises:
obtaining message data to be matched by processing the message data to be processed according to the entity mention information (S506);
obtaining a plurality of correlation degree values output by an entity ranking model by inputting the message data to be matched and the entity description information respectively corresponding to the plurality of candidate entities into the entity ranking model, wherein the correlation degree value describes a correlation degree between the entity mention information in the message data to be matched and the corresponding entity description information (S507); and
determining a candidate entity whose entity description information corresponds to a maximum correlation degree value in the plurality of correlation degree values as the target entity (S508).

3. The method of claim 1 or 2, wherein determining the one or more candidate entities associated with the entity mention information (S103; S505; S705) comprises:
determining target mention information matching with the entity mention information from an index table, wherein the index table is configured to index an associated entity according to the target mention information (S206); and
determining the entity associated with the target mention information as a candidate entity (S207).

4. The method of claim 3, before obtaining the message data to be processed (S101; S204; S701), further comprising:
obtaining knowledge graph data, wherein the knowledge graph data comprises a plurality of pieces of entity description information, and a plurality of entities associated with the entity description information (S201);
obtaining a plurality of pieces of target mention information respectively by parsing the plurality of pieces of entity description information (S202); and
building the index table according to the plurality of pieces of target mention information and the plurality of associated entities (S203).

5. The method of any of claims 1 to 4, wherein obtaining the message data to be processed (S101; S204; S701) comprises:
obtaining initial message data (S501);
obtaining candidate message data by preprocessing the initial message data (S502); and
in response to data characteristic of the candidate message data satisfying a preset condition, determining the candidate message data as the message data to be processed (S503).

6. The method of claim 5, wherein obtaining the candidate message data by preprocessing the initial message data (S502) comprises:
identifying a first data segment of a first type from the initial message data;
obtaining a second data segment of a second type by performing type conversion on the first data segment, wherein the first type is different from the second type; and
obtaining the candidate message data by replacing the first data segment in the initial message data with the second data segment.

7. The method of claim 5 or 6, wherein the data characteristic comprises a length characteristic of the candidate message data and/or a preset character proportion characteristic.

8. The method of any of claims 1 to 7, wherein obtaining the entity mention information by processing the message data to be processed according to the multi-pattern matching method (S102; S205; S504) comprises:
obtaining candidate mention information by processing the message data to be processed according to the multi-pattern matching method (S702);
obtaining a verification result by performing verification processing on the candidate mention information (S703); and
in response to the verification result satisfying a verification condition, determining the candidate mention information as the entity mention information (S704).

9. The method of claim 8, wherein performing verification processing on the candidate mention information (S703) comprises:
in response to the candidate mention information being a first information type, performing word segmentation verification on the candidate mention information; and
in response to the candidate mention information being a second information type, performing word neighborhood verification on the candidate mention information, wherein the first information type is different from the second information type.

10. The method of claim 9, wherein performing word segmentation verification on the candidate mention information comprises:
performing word segmentation processing on the message data to be processed to obtain a plurality of words; and
in response to the candidate mention information matching a first word, determining that a verification result of the word segmentation verification satisfies the verification condition, wherein the first word belongs to the plurality of words.

11. The method of claim 9 or 10, wherein performing word neighborhood verification on the candidate mention information comprises:
in response to the candidate mention information being untruncated information, determining that a verification result of the word neighborhood verification satisfies the verification condition.

12. An apparatus (90) for recognizing an entity, comprising:
a first obtaining module (901), configured to obtain message data to be processed;
a processing module (902), configured to obtain entity mention information by processing the message data to be processed according to a multi-pattern matching method;
a first determining module (903), configured to determine one or more candidate entities associated with the entity mention information, and determine entity description information corresponding to the one or more candidate entities; and
a second determining module (904), configured to determine a target entity mentioned in the entity mention information according to the message data to be processed and the entity description information.

13. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method according to any of claims 1-11.

14. A non-transitory computer-readable storage medium storing computer instructions, wherein the computer instructions are configured to cause a computer to implement the method according to any of claims 1-11.

15. A computer program product comprising computer programs, wherein when the computer programs are executed by a processor, the method according to any of claims 1-11 is implemented.
